# EUROPEAN PATENT APPLICATION

(11) **EP 3 787 351 A1**
(43) Date of publication of application: **03.03.2021**
(21) Application number: 20187971.5
(22) Date of filing: 27.07.2020
(51) Int. Cl.: H04W 52/02, H04W 76/28, H04W 72/04

(54) **EXTENDING ACTIVE STATE BASED ON ADAPTATION**

(30) Priority: 15.08.2019 US 201962887600 P
(71) Applicant: Nokia Technologies Oy, 02610 Espoo (FI)
(72) Inventor: HAKOLA, Sami-Jukka, 90450 Kempele (FI); KOSKELA, Timo, 90670 Oulu (FI); KARJALAINEN, Juha, 90540 Oulu (FI); KAIKKONEN, Jorma, 90800 Oulu (FI)
(74) Representative: Nokia EPO representatives

(57) **Abstract**

A method can include transitioning, by a device, from a sleep state to a monitoring state, processing, during the monitoring state, a wakeup signal, determining an adaptation based on the wakeup signal, transitioning to an active state after processing the wakeup signal, and extending the active state based on the determined adaptation.

## Description

### TECHNICAL FIELD

This description relates to wireless networks.

### BACKGROUND

In wireless networks, wireless devices such as user equipments can be powered by batteries. The batteries can have a limited amount of energy between recharging events.

### SUMMARY

According to a first aspect of the present invention, there is provided a first method. The first method can include transitioning, by a device, from a sleep state to a monitoring state, processing, during the monitoring state, a wakeup signal, determining an adaptation based on the wakeup signal, transitioning to an active state after processing the wakeup signal, and extending the active state based on the determined adaptation.

Embodiments of the first aspect may comprise at least one feature from the following bulleted list or any combination of the following features:
- the active state may comprise an active state of a discontinuous reception (DRX) cycle;
- the extending the active state may comprise extending the active state during a discontinuous reception (DRX) onDuration state;
- the active state may be extended irrespective of receiving a scheduling command;
- the active state may be extended irrespective of the device triggering a packet indication;
- the adaptation may comprise at least one of bandwidth part (BWP) switching, aperiodic channel state information reference signal (CSI-RS) measurement and reporting triggering, aperiodic tracking reference signal (TRS) triggering, or component carrier activation;
- the wakeup signal may be received during a monitoring occasion preceding a discontinuous reception (DRX) onDuration period; and
   the transitioning to the active state may comprise transitioning from the monitoring state directly to the active state without entering the sleep state;
- the extending the active state may comprise starting an inactivity timer after transitioning to the active state;
- the extending the active state may comprise starting an inactivity timer a specified time after transitioning to the active state, the specified time being based on the determined adaptation;
- the extending the active state may comprise starting an inactivity timer a specified time after transitioning to the active state, the specified time being based on a time period required to process the determined adaptation;
- the extending the active state may comprise starting an inactivity timer upon transitioning to the active state;
- the first method may further comprise:
   restarting the inactivity timer in response to the device receiving a control signal;
      and/or
   transitioning to the sleep state when the inactivity timer expires;
- the extending the active state may comprise:
   starting an adaptation timer while in the active state, a length of the adaptation timer being based on the determined adaptation; and
   transitioning from the active state to the sleep state upon expiration of the adaptation timer;
- the first method may further comprise, after transitioning from the sleep state to the monitoring state and prior to transitioning to the active state, transitioning from the monitoring state to the sleep state;
- the device may comprise a wireless device;
- the device may comprise a user equipment.

According to the second aspect of the present invention, there is provided an apparatus comprising means for performing the first method according to the first aspect of the present invention.

According to a third aspect of the present invention, there is provided a non-transitory computer-readable storage medium including instructions stored thereon that, when executed by at least one processor, are configured to cause a computing system to perform the first method according to the first aspect of the present invention.

According to a fourth aspect of the present invention, there is provided an apparatus comprising at least one processor, and at least one memory including computer program code, the at least one memory and the computer program code can be configured to, with the at least one processor, cause the apparatus at least to perform the first method according to the first aspect of the present invention.

According to a fifth aspect of the present invention, there is provided a second method. The second method can comprise transmitting, by a network node to a device, a wakeup signal, the wakeup signal being transmitted during a monitoring state of the device, wherein the wakeup signal is accompanied by an adaptation, wherein the adaptation indicates to the device to extend an active state.

Embodiments of the fifth aspect may comprise at least one feature from the following bulleted list or any combination of the following features:
- the adaptation may indicate the device to start an inactivity timer;
- the adaptation may comprise at least one of bandwidth part (BWP) switching, aperiodic channel state information reference signal (CSI-RS) measurement and reporting triggering, aperiodic tracking reference signal (TRS) triggering, or component carrier activation;
- the network node may comprise a base station.

According to a sixth aspect of the present invention, there is provided a non-transitory computer-readable storage medium comprising instructions stored thereon that, when executed by at least one processor, are configured to cause a computing system to perform the second method according to the fifth aspect of the present invention.

According to a seventh aspect of the present invention, there is provided and apparatus comprising at least one processor, and at least one memory including computer program code, the at least one memory and the computer program code configured to, with the at least one processor, cause the apparatus at least to perform the second method according to the fifth aspect of the present invention.

According to an eighth aspect of the present invention, there is provided and apparatus comprising means for causing the apparatus at least to perform the second method according to the fifth aspect of the present invention.

According to a ninth aspect, there is provided an apparatus comprising means for transitioning, by a device, from a sleep state to a monitoring state, means for processing, during the monitoring state, a wakeup signal, means for determining an adaptation based on the wakeup signal, means for transitioning to an active state after processing the wakeup signal, and means for extending the active state based on the determined adaptation. In some examples, the extending the active state irrespective of reception of a scheduling command may comprise starting, by the apparatus, an inactivity timer without receiving scheduling command.

According to a tenth aspect, there is provided an apparatus comprising means for transmitting, by a network node to a device, a wakeup signal, the wakeup signal being transmitted during a monitoring state of the device, wherein the wakeup signal is accompanied by an adaptation, wherein the adaptation indicates to the device to extend an active state.

According to an eleventh aspect of the present invention, there is provided an apparatus comprising at least one processor, and at least one memory including computer program code. The at least one memory and the computer program code can be configured to, with the at least one processor, cause the apparatus at least to perform transitioning from a sleep state to a monitoring state, processing, during the monitoring state, a wakeup signal, transitioning to an active state after processing the wakeup signal, and extending the active state irrespective of reception of a scheduling command.

According to a twelfth aspect of the present invention, there is provided a third method. The third method can include transitioning from a sleep state to a monitoring state, processing, during the monitoring state, a wakeup signal, transitioning to an active state after processing the wakeup signal, and extending the active state irrespective of reception of a scheduling command. In some examples, the extending the active state irrespective of reception of a scheduling command can comprise starting, by the apparatus, an inactivity timer without receiving scheduling command.

The details of one or more implementations are set forth in the accompanying drawings and the description below. Other features will be apparent from the description and drawings, and from the claims.

### BRIEF DESCRIPTION OF THE DRAWINGS

FIG. 1 is a network diagram showing a base station and user equipments according to an example embodiment.
FIG. 2 is a horizontal timing diagram showing a device extend an active state by starting an inactivity timer according to an example embodiment.
FIG. 3 is a vertical timing diagram showing actions performed by a user equipment and a base station according to an example embodiment.
FIG. 4 is a flowchart showing a method of controlling an active state according to an example embodiment.
FIG. 5 is a flowchart showing a method of extending an active state based on an adaptation according to an example embodiment.
FIG. 6 is a flowchart showing a method of performing an adaptation according to an example embodiment.
FIG. 7 is a block diagram of a wireless device according to an example embodiment.

### DETAILED DESCRIPTION

When a device, such as a wireless device and/or user equipment, is connected to a base station or access point, such as in a radio resource control (RRC) connected state with a new radio / fifth generation base station (gNB), the device's battery life can be an important aspect of the user's experience. The network, including the base station, can serve bursty user data to the device in short durations. In a discontinuous reception (DRX) cycle, the device can enter a low-power sleep mode, monitoring for wakeup signals during a fraction of the DRX cycle. The base station can send a wakeup signal to the device when the base station wants to trigger the device for network access from low-power mode. The device can wakeup and/or enter a higher-power state for example to receive and/or process the downlink data sent by the base station.

Thus, in the low-power mode, user equipment (UE) may stay in the power efficient mode, such as micro sleep or OFF period in the (short or long) DRX cycle, unless it is informed of network access through the UE power saving framework. Informing the UE of the network access may be called as a wake-up procedure in RRC CONNECTED state, where the UE is configured by the power saving signal/channel before the DRX ON duration, to trigger the UE waking up only when there is DL data arriving. The UE is not required to wake up at the DRX ON at least for PDCCH monitoring, if the power saving signal is not detected.

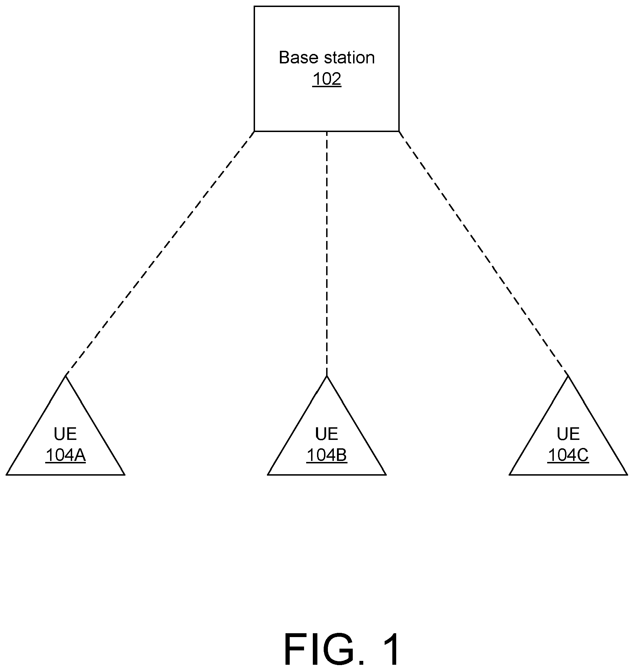

FIG. 1 is a network diagram showing a base station 102 and user equipments 104A, 104B, 104C according to an example embodiment. The base station 102, which may be considered a donor next generation Node B (donor gNB), may be in wireless communication with wireless devices such as the user equipments (UEs) 104A, 104B, 104C. The UEs 104A, 104B, 104C (which can collectively and/or individually be referred to as UEs 104) may include cellphones, tablets, laptop computers, or any computing device capable of wirelessly sending and receiving signals to and from the base station 102 (and/or any intermediate nodes). Packets may travel between the UEs 104 (and other UEs not shown in FIG. 1) and the base station 102. In some examples, the packets can be considered radio link control (RLC) service data units (SDUs). The base station 102 can be considered an uplink device and/or network node with respect to the UEs 104, and the UEs 104 can be considered downlink devices with respect to the base station 102.

While the terminology of Fifth-Generation (5G) New Radio (NR) is used herein, the techniques, methods, and/or functions described herein may be applied to any wireless network.

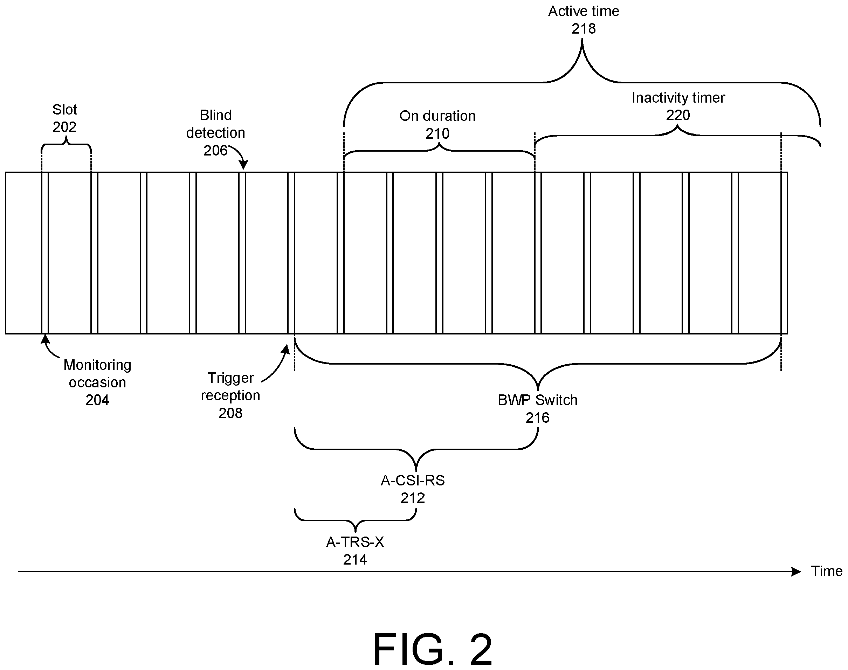

FIG. 2 is a horizontal timing diagram showing a device extend an active state by starting an inactivity timer according to an example embodiment. To minimize additional power consumption from monitoring PDCCH Power Saving Channel for wake-up UE 104 to monitor PDCCH on the coming on duration (onDuration), the base station 102 can send wakeup signals close to an on duration 210 (that is, the monitoring occasions for the wake-up can be configured close to the onDuration). For example, UE's monitoring occasions outside Active Time of DRX cycle can be within last two slots before the onDuration.

The monitoring occasion 204 within a slot 202 can be an example of periodic monitoring occasions in which wakeup signals are not sent by the base station 102 and/or received by the UE 104 or device. The UE 104 can be considered in a sleep state and/or low-power state in between monitoring occasions 204, and/or between a monitoring occasion, blind detection 206, and/or trigger reception 208 and an active state 218 and/or on duration 210. The base station 102 can send, and/or the UE 104 or device can receive, a wakeup signal during a blind detection slot 206 and/or a trigger reception subslot 208, both of which are close to an on duration during which the device is in an active and/or on state listening for and/or processing downlink data.

If the wakeup signal was received by the UE 104 during monitoring occasion, the UE 104 may respond to receiving the wakeup signal during the monitoring occasion by starting performing monitoring PDCCH channel. In some cases, the UE 104 may start monitoring the PDCCH channel from the first slot within onDuration.

In some cases, wakeup signals, such as a wakeup signal received during the trigger reception subslot 208, can indicate actions other than sending downlink packets. The actions can include adaptations, such as bandwidth part (BWP) switching 216, aperiodic channel state information reference signal (A-CSI-RS) measurement and reporting triggering 212, aperiodic tracking reference signal (A-TRS-X) triggering 214, or component carrier activation. Some adaptations, such as BWP switching 216, can take longer than other adaptations, and/or longer than an on duration 210 for receiving downlink data.

Various adaptations may have non-zero application latency. As a result, different triggered UE 104 adaptations and related processing latencies/interrupt times may fall upon onDuration, not leaving sufficient time for PDCCH monitoring.

In an example embodiment, UE 104 is configured to extend Active Time 218 irrespective of whether PDCCH scheduling was received or not. For example, the active time of DRX cycle may be extended based on adaptation. The active time may be extended always if adaptation is received along with wakeup signal. Alternatively, active time may be extended based on type of adaptation received and/or based on time needed to process the adaptation.

Extending some embodiments, extending active time 218 may be performed by means of starting an inactivity timer 220 during onDuration 210 irrespective of whether a packet and/or signal indicating PDCCH scheduling of uplink and/or downlink data was received or not.

The decision to extend active time 218 may be done before, during, or after processing the received adaptation. This decision can be made before entering onDuration 210 or while being in onDuration 210.

To reduce the active time 218 when the UE 104 is not receiving downlink data and/or performing a long adaptation, such as a BWP switch, the UE 104 can respond to a wakeup signal by entering an on duration 210 of an active state 218 with a short duration. The on duration 210 can be a duration that the UE 104 waits for, after waking up, a scheduling packet, such as an uplink or downlink packet within the PDCCH. If the UE 104 receives a scheduling packet during the on duration 210, then the UE 104 stays awake and starts an inactivity timer 220. The inactivity timer 220 can be a duration that the UE 104 waits to successfully decode a scheduling packet from the last successful reception, processing, and/or decoding of a scheduling packet, until the UE 104 can go back into the sleep mode. The UE 104 can restart the inactivity timer in response to the UE 104 receiving a control signal. The on duration 210 can be shorter than the time required to perform at least one of the adaptations, such as the BWP switch. In some examples, the adaptation can have a shorter time than the on duration 210, but consume a large portion of the on duration 210.

The UE 104 can respond to a wakeup signal that indicates an adaptation that requires a longer time period than the standard on duration 210 (and/or that the adaptation will consume a large portion of the on duration 210) by extending the active time 218 and/or active state beyond the standard on duration 210. The active time 218 can include a total duration that the UE 104 monitors for signals, such as monitoring for signals within the PDCCH. The active time 218 can include, for example, the on duration 210, the time that the UE 104 is performing continuous reception during the duration of the inactivity timer 220 and/or before the inactivity timer 220 has expired, and/or a time when the UE 2104 is performing continuous reception while waiting for a retransmission opportunity. The UE 104 can extend the active time 218 beyond the standard on duration 210 by, for example, starting an inactivity timer 220 at the expiration of the on duration 210. The UE 104 can extend the active time 218 and/or active state beyond the standard on duration 210 by starting an inactivity timer 220 at the expiration of the on duration 210 irrespective of receiving a scheduling command and/or the UE 104 triggering a packet indication, even though the UE 104 has not received, processed, and/or decoded a scheduling packet. The UE 104 can extend the active state 218 by starting the inactivity timer 220 a specified time after transitioning to the active state and/or active time 218. The specified time can be based on the adaptation indicated by the wakeup signal.

The UE 104 can remain in the active state 218 until the inactivity timer 220 expires. The inactivity timer 220 can have a standard starting value, and can reset and/or return to the standard starting value upon receiving, processing, and/or decoding an indication of scheduled uplink or downlink data, such as a scheduling packet received via the PDCCH. The reduction in time of the standard on duration 210 can save power, while the extension of the active time 218 to accommodate adaptations can enable the UE 104 to accommodate adaptations that take longer than the standard on duration 210.

In some examples, the UE 104 can extend the active time 218 beyond the standard on duration 210 by starting an adaptation timer instead of the inactivity timer 220. The adaptation timer can be a dedicated timer that keeps the UE 104 in the active time 218 for a predetermined time after the on duration 210 expires. In some examples, the adaptation timer can have a single predetermined value and/or time after which the adaptation timer will expire. In some examples, the adaptation timer can have multiple values, and the time for the adaptation timer will be set based on the adaptation, such as different times for bandwidth part (BWP) switching 216, aperiodic channel state information reference signal (A-CSI-RS) measurement and reporting triggering 212, aperiodic tracking reference signal (A-TRS-X) triggering 214, and component carrier or secondary cell activation.

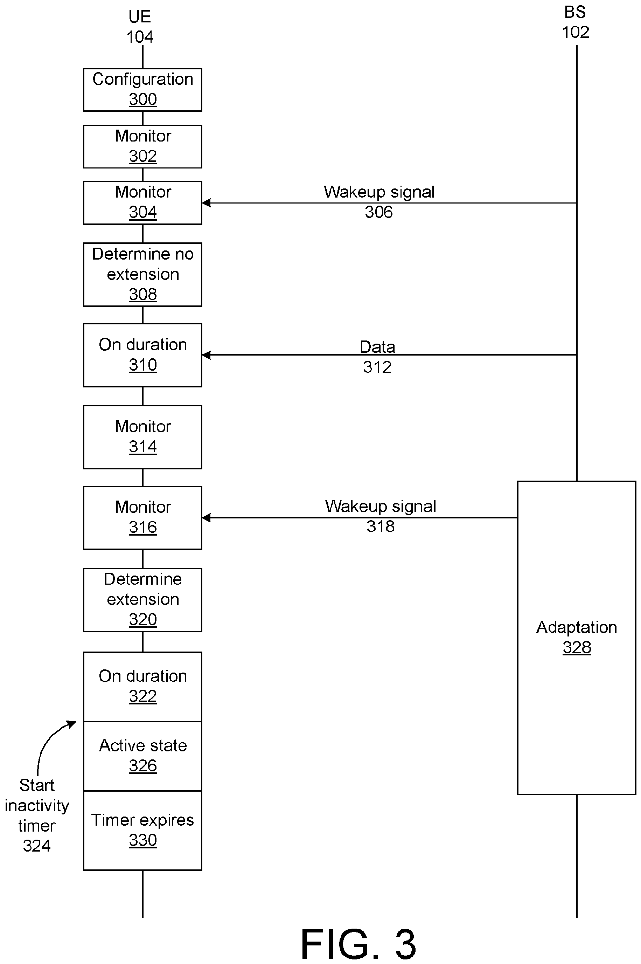

FIG. 3 is a vertical timing diagram showing actions performed by a user equipment 104 and a base station 102 according to an example embodiment. The UE 104 can perform configuration (300) in a configuration phase. Prior to the configuration phase, the UE 104 has sent and/or provided capability information to the base station 102, informing the base station 102 of the capability of the UE 104 to perform adaptations, such as bandwidth part (BWP) switching 216, aperiodic channel state information reference signal (A-CSI-RS) measurement and reporting triggering 212, aperiodic tracking reference signal (A-TRS-X) triggering 214, and component carrier or secondary cell activation. In some examples, the capability information can include time required, and/or interrupt time, for the UE to perform adaptations.

During the configuration (300), the UE 104 can configure discontinuous reception (DRX), such as long DRX configurations and/or short DRX configurations. During the configuration (300), the UE 104 can configure monitoring occasions 204, such as PDCCH monitoring occasions, both during and/or inside the active time 218 and outside, and/or before and after, the active time 218. During the configuration (300), the UE 104 can configure adaptations, such as bandwidth part (BWP) switching 216, aperiodic channel state information reference signal (A-CSI-RS) measurement and reporting triggering 212, aperiodic tracking reference signal (A-TRS-X) triggering 214, and component carrier activation. The base station 102 can indicate the adaptations to configure outside the active time 218, such as via a PDCCH-based power-saving channel, and/or during blind detection 206 and/or trigger reception 208. During the configuration (300), the UE 104 can configure a downlink control information (DCI) format. The DCI format can have fields for triggering the different configured adaptations. During the configuration (300), the UE 104 can configure a time period to determine whether or not the UE 104 should prolong and/or extend the active time 218 autonomously and/or without detecting or receiving a scheduling packet such as a PDCCH scheduling packet for uplink or downlink data. In some examples, the time period to determine whether to extend the active time 218 can be included in specifications for the UE 104 and/or could be based on the on duration 210.

After the configuration (300), the UE 104 can monitor (302) for a wakeup signal. The monitoring (302) for the wakeup signal can be performed outside the active time 218, and can include transitioning from a sleep state to a monitoring state. In some examples, the monitoring can include monitoring the PDCCH during configured monitoring occasions 204, such as to detect a PDCCH-based power-saving signal. If the UE 104 does not receive a scheduling packet or PDCCH-based power-saving signal, then the UE 104 can return and/or transition from the monitoring state to the sleep state.

The UE 104 can again perform monitoring (304), and/or transition back from the sleep state to the monitoring state. During the monitoring (304), the base station 102 can send a wakeup signal 306 and/or wakeup packet to the UE 104.

After receiving and/or processing the wakeup signal 306, the UE 104 can determine whether to perform an adaptation and/or whether to extend the active time 218. In this example, the wakeup signal 306 does not indicate an adaptation, and the UE 104 determines that there will be no extension (308) of the active time 218, and/or that the active time 218 will last no longer than the on duration 210.

After and/or during the determination that there will be no extension (308) of the active time 218, the UE 104 can transition to an active time 218 and/or on duration 210 (310). In some examples, the UE 104 can transition directly from the monitoring occasion 204, blind detection 206, and/or trigger reception 208 to the active time 218 and/or on duration 210 (310). In some examples, the UE 104 can transition from the monitoring occasion 204, blind detection 206, and/or trigger reception 208 to a sleep state, and then to the active time 218 and/or on duration 210 (310). During the on duration 210 (310), the base station 102 can send data 312 to the UE 104, and the UE 104 can process the data 312.

After the on duration 210 (310), the UE 104 can return to the sleep state in a DRX mode. The UE 104 can perform monitoring (314, 316), as discussed above with respect to (302, 304).

In the example shown in FIG. 3, the UE receives a wakeup signal 318 and/or wakeup packet during monitoring (316). In this example, the wakeup signal 318 can indicate an adaptation to be performed. In this example, the UE 104 can determine that the active time 218 will be extended (320). The UE can determine that the active time 218 will be extended (320) based on an indication of an adaptation included in the wakeup signal 318. The base station 102 can begin performing the adaptation (328).

After determining to extend the active state (320), the UE 104 can enter an on duration 210 (322) and/or on state. The UE 104 can remain in the on duration 210 (322) and/or on state for a predetermined and/or standard time, after which the UE 104 will extend the active state 218 (326) (which can include the on duration 210 (322)) by starting an inactivity timer 324. The active state 218 (326) can extend beyond the duration of time required to perform the adaptation (328), and can end when the inactivity timer expires (330). After the inactivity timer expires (330), the UE 104 can re-enter and/or transition to the sleep state.

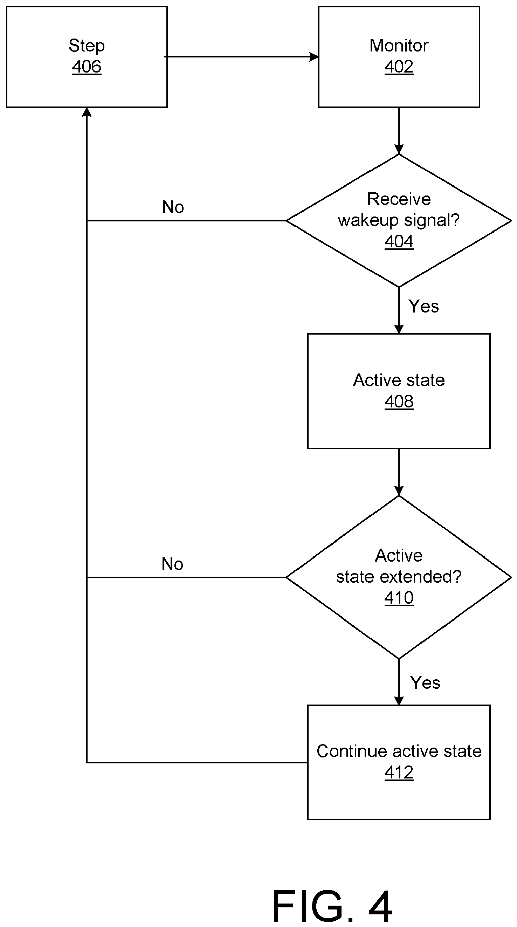

FIG. 4 is a flowchart showing a method of controlling an active state according to an example embodiment. The method can be performed by the UE 104.

The method can include monitoring (402) for wakeup signals. The monitoring (402) can include transitioning from a sleep state to a monitoring state.

During the monitoring state, the method can include determining whether the UE 104 received a wakeup signal from the base station 102. If the UE 104 determines that the UE 104 did not receive a wakeup signal, then the UE 104 can transition to a sleep state (406), and thereafter transition back to the monitoring state (402) as part of a discontinuous reception (DRX) cycle.

If the UE 104 determines that the UE 104 did receive a wakeup signal and/or wakeup packet from the base station 102, and/or processed a wakeup signal and/or wakeup packet from the base station 102 during the monitoring (402), then the UE 104 can transition to an active state 218 (408) after processing the wakeup signal 306, 318.

After determining that the UE 104 received a wakeup signal, processing the wakeup signal, and/or after entering the active state 218 (408), the UE 104 can determine whether to extend the active state (410). The UE 104 can determine whether to extend the active state 218 (410) based on whether the wakeup signal 306, 318 indicated an adaptation to perform. The UE 104 can determine to extend the active state based on the wakeup signal 306, 318 indicating an adaptation to perform, and/or based on the wakeup signal 306, 318 indicating an adaptation to perform that will last longer than the standard on duration 210.

If the UE 104 determines not to extend the active state 218, then the UE 104 can return to the sleep state (406). If the UE 104 determines to extend the active state 218, then the UE can continue the active state (412), such as by starting an inactivity timer and/or adaptation timer. After the inactivity timer and/or adaptation timer expires, the UE 104 can transition from the active state 218 to the sleep state (406).

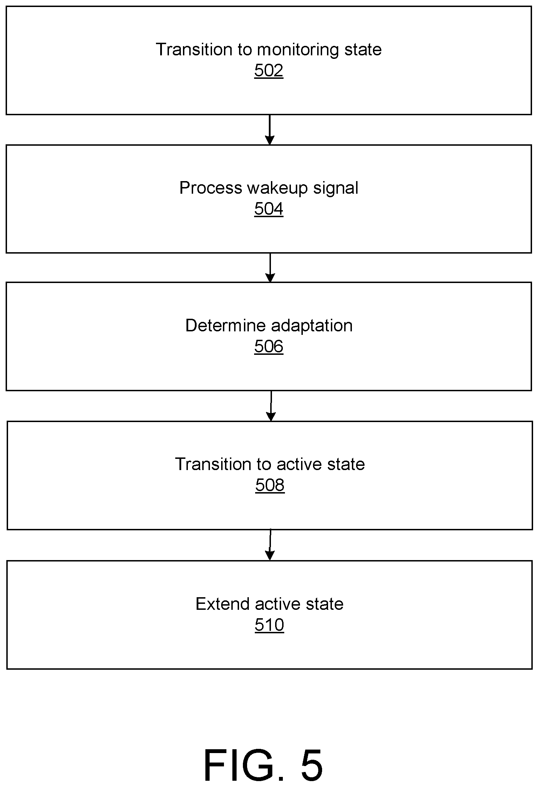

FIG. 5 is a flowchart showing a method of extending an active state based on an adaptation according to an example embodiment. The method can include transitioning, by a device such as the UE 104, from a sleep state to a monitoring state (502). The method can include processing, during the monitoring state, a wakeup signal (502). The method can include determining an adaptation based on the wakeup signal (506). The method can include transitioning to an active state after processing the wakeup signal (508). The method can include extending the active state based on the determined adaptation (510).

According to some examples, the active state can comprise an active state of a discontinuous reception (DRX) cycle.

According to some examples, the extending the active state can comprise extending the active state during a discontinuous reception (DRX) onDuration state.

According to some examples, the active state can be extended irrespective of receiving a scheduling command.

According to some examples, the active state can be extended irrespective of the device triggering a packet indication.

According to some examples, the adaptation can comprise at least one of bandwidth part (BWP) switching, aperiodic channel state information reference signal (CSI-RS) measurement and reporting triggering, aperiodic tracking reference signal (TRS) triggering, or component carrier activation.

According to some examples, the wakeup signal can be received during a monitoring occasion preceding a discontinuous reception (DRX) onDuration period, and the transitioning to the active state can comprise transitioning from the monitoring state directly to the active state without entering the sleep state.

According to some examples, the extending the active state can comprise starting an inactivity timer after transitioning to the active state.

According to some examples, the extending the active state can comprise starting an inactivity timer a specified time after transitioning to the active state, the specified time being based on the determined adaptation.

According to some examples, the extending the active state can comprise starting an inactivity timer a specified time after transitioning to the active state, the specified time being based on a time period required to process the determined adaptation.

According to some examples, the extending the active state can comprise starting an inactivity timer upon transitioning to the active state.

According to some examples, the method can further include restarting the inactivity timer in response to the device receiving a control signal, and/or transitioning to the sleep state when the inactivity timer expires.

According to some examples, the extending the active state can include starting an adaptation timer while in the active state, a length of the adaptation timer being based on the determined adaptation, and transitioning from the active state to the sleep state upon expiration of the adaptation timer.

According to some examples, the method can further include, after transitioning from the sleep state to the monitoring state and prior to transitioning to the active state, transitioning from the monitoring state to the sleep state.

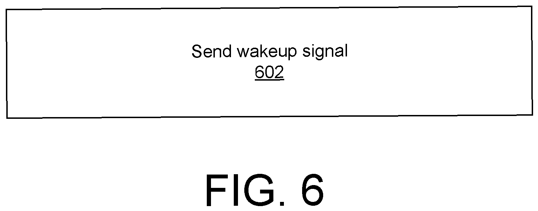

FIG. 6 is a flowchart showing a method of performing an adaptation according to an example embodiment. The method can include transmitting, by a network node such as the base station 102 to a device such as the UE 104, a wakeup signal (602), the wakeup signal being transmitted during a monitoring state of the device, wherein the wakeup signal is accompanied by an adaptation, and wherein the adaptation indicates to the device to extend an active state.

According to some examples, the adaptation can indicate the device to start an inactivity timer.

According to some examples, the adaptation can comprise at least one of bandwidth part (BWP) switching, aperiodic channel state information reference signal (CSI-RS) measurement and reporting triggering, aperiodic tracking reference signal (TRS) triggering, or component carrier activation.

According to some examples, the network node can comprise a base station.

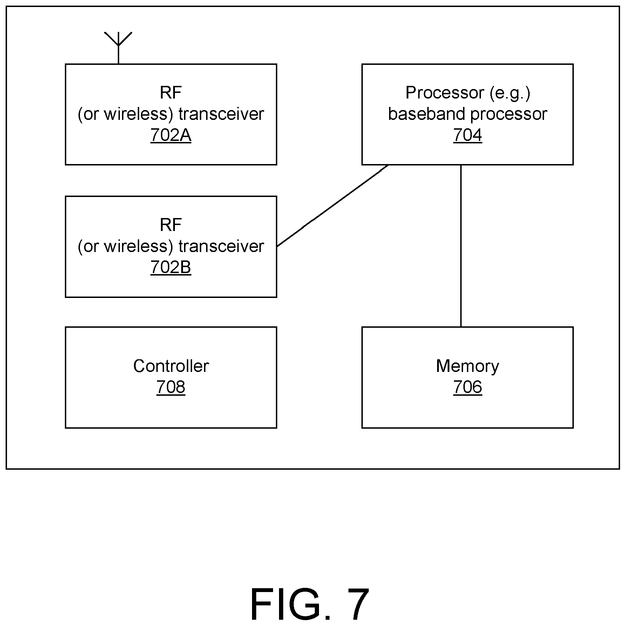

FIG. 7 is a block diagram of a wireless device 700 according to an example embodiment. The wireless device 700, which can be considered an apparatus, may include a base station 102 or a UE 104. The wireless station 700 may include, for example, one or two RF (radio frequency) or wireless transceivers 702A, 702B, where each wireless transceiver includes a transmitter to transmit signals and a receiver to receive signals. The wireless device 700 also includes a processor 704 to execute instructions or software and control transmission and receptions of signals, and a memory 706 to store data and/or instructions.

Processor 704 may also make decisions or determinations, generate frames, packets or messages for transmission, decode received frames or messages for further processing, and other tasks or functions described herein. Processor 704, which may be a baseband processor, for example, may generate messages, packets, frames or other signals for transmission via wireless transceiver 702. Processor 704 may control transmission of signals or messages over a wireless network, and may receive signals or messages, etc., via a wireless network (e.g., after being down-converted by wireless transceiver 702, for example). Processor 704 may be programmable and capable of executing software or other instructions stored in memory or on other computer media to perform the various methods, tasks, and/or functions described above, such as one or more of the methods, tasks, and/or functions described above. Processor 704 may be (or may include), for example, hardware, programmable logic, a programmable processor that executes software or firmware, and/or any combination of these. Using other terminology, processor 704 and transceiver 702 together may be considered as a wireless transmitter/receiver system, for example.

In addition, referring to FIG. 7, a controller (or processor) 708 may execute software and instructions, and may provide overall control for the device 700, and may provide control for other systems not shown in FIG. 7, such as controlling input/output devices (e.g., display, keypad), and/or may execute software for one or more applications that may be provided on wireless device 700, such as, for example, an email program, audio/video applications, a word processor, a Voice over IP application, or other application or software.

The wireless device 700 may also include a memory 706. The memory 706 may include a non-transitory computer-readable storage medium. The memory 706 may store instructions thereon that, when executed, cause the wireless device 700 to perform any combination of the methods, functions, and/or techniques described herein. The memory 706 can include at least one memory including computer program code. The at least one memory and the computer program code can be configured to, with the at least one processor 704, cause the wireless device 700 and/or apparatus to perform any combination of the methods, functions, and/or techniques described herein.

Implementations of the various techniques described herein may be implemented in digital electronic circuitry, or in computer hardware, firmware, software, or in combinations of them. Implementations may be implemented as a computer program product, i.e., a computer program tangibly embodied in an information carrier, e.g., in a machine-readable storage device, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in, special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes and equivalents will now occur to those skilled in the art. It is, therefore, to be understood that the appended claims are intended to cover all such modifications and changes as fall within the true spirit of the embodiments of the invention.

## Claims

1. An apparatus comprising:
means for transitioning, by a device, from a sleep state to a monitoring state;
means for processing, during the monitoring state, a wakeup signal;
means for determining an adaptation based on the wakeup signal;
means for transitioning to an active state after processing the wakeup signal; and
means for extending the active state based on the determined adaptation.

2. The apparatus of claim 1, wherein the active state comprises an active state of a discontinuous reception (DRX) cycle.

3. The apparatus of claims 1-2, wherein the extending the active state comprises extending the active state during a discontinuous reception (DRX) onDuration state.

4. The apparatus of any of claims 1-3, wherein the active state is extended irrespective of receiving a scheduling command and/or the active state is extended irrespective of the device triggering a packet indication.

5. The apparatus of any of claims 1-4, wherein the adaptation comprises at least one of bandwidth part (BWP) switching, aperiodic channel state information reference signal (CSI-RS) measurement and reporting triggering, aperiodic tracking reference signal (TRS) triggering, or component carrier activation.

6. The apparatus of any of claims 1-5, wherein:
the wakeup signal is received during a monitoring occasion preceding a discontinuous reception (DRX) onDuration period; and
the transitioning to the active state comprises transitioning from the monitoring state directly to the active state without entering the sleep state.

7. The apparatus of any of claims 1-6, wherein the extending the active state comprises starting an inactivity timer upon or after transitioning to the active state.

8. The apparatus of claim any of claims 1-7, further comprising:
restarting the inactivity timer in response to the device receiving a control signal; and/or
transitioning to the sleep state when the inactivity timer expires.

9. The apparatus of any of claims 1-8, wherein the extending the active state comprises:
starting an adaptation timer while in the active state, a length of the adaptation timer being based on the determined adaptation; and
transitioning from the active state to the sleep state upon expiration of the adaptation timer.

10. The apparatus of any of claims 1-9, further comprising, after transitioning from the sleep state to the monitoring state and prior to transitioning to the active state, transitioning from the monitoring state to the sleep state.

11. An apparatus comprising:
means for transmitting, by a network node to a device, a wakeup signal, the wakeup signal is being transmitted during a monitoring state of the device, wherein the wakeup signal is accompanied by an adaptation, wherein the adaptation indicates to the device to extend an active state.

12. The apparatus of claim 11, wherein the adaptation indicates the device to start an inactivity timer.

13. The apparatus of either of claims 11 or 12, wherein the adaptation comprises at least one of bandwidth part (BWP) switching, aperiodic channel state information reference signal (CSI-RS) measurement and reporting triggering, aperiodic tracking reference signal (TRS) triggering, or component carrier activation.

14. The apparatus of any of claims 11 - 13, wherein the network node comprises a base station.

15. A method comprising
transitioning from a sleep state to a monitoring state;
processing, during the monitoring state, a wakeup signal;
transitioning to an active state after processing the wakeup signal; and
extending the active state irrespective of reception of a scheduling command.
